# EUROPEAN PATENT SPECIFICATION

(11) **EP 1 808 279 B1**
(45) Date of publication and mention of the grant of the patent: **03.11.2010**
(21) Application number: 07000620.0
(22) Date of filing: 12.01.2007
(51) Int. Cl.: B27L 11/00, B27L 11/02, B02C 25/00

(54) **A wood chipper and a method for feeding wood into a wood chipper**
Holzhäcksler und Verfahren zur Holzzufuhr für einen Holzhäcksler
Hachoir à bois et procédé d'alimentation en bois du hachoir à bois

(30) Priority: 13.01.2006 DK 200600060
(43) Date of publication of application: 18.07.2007
(73) Proprietor: Linddana A/S, 7160 Torring (DK)
(72) Inventor: Knudsen, Jan Juul, 8783 Hornsyld (DK)
(74) Representative: Nielsen, Leif

(56) References cited:
- US-A- 3 955 765
- US-A- 5 088 532
- US-A1- 2004 108 397
- US-B1- 6 293 479
- US-B1- 6 830 204

## Description

### Field of the Invention

The present invention concerns a wood chipper with draw-in rollers for drawing wood against a rotor disc provided with at least one cutter spaced apart from the rotor disc, and with a first sensor for monitoring the rotational speed of the rotor disc.

Furthermore, the invention concerns a method for feeding wood into a wood chipper, where draw-in rollers are used for drawing the wood against a rotor disc provided with at least one cutter spaced apart from the rotor disc, and where monitoring of the rotational speed of the rotor disc is performed.

### Background of the Invention

Until now, wood chippers where monitoring of the rotational speed and/or number of revolutions has been performed, are known. Examples of this are e.g. disclosed in US 2004/0108397 A (on which the preamble of the independent claims is based), US 5 088 532, US 3 955 765 and US 6 830 204. In these prior art wood chippers, draw-in rollers are used for drawing wood in against a rotor disc where one or more cutters are located. Preferably, a number of three cutters are applied, but other numbers are possible. The rotor disc is driven with constant rotation and may e.g. be powered by the power take-off shaft or a diesel engine with a fixed displacement pump, so that the control of the diesel engine or tractor with power take-off is used for monitoring the number of revolutions/rotational speed of the rotor disc. The draw-in rollers moves the wood against the cutters, hereby forming a flap when the end part of the wood is cut off by a rotating cutter. In the rotor disc of the wood chipper, the cutters are disposed in openings so that the cutter or the cutter edge is provided spaced apart from the surface of the rotor disc facing the incoming wood. The end part of the wood will hereby be cut off by the cutter and ejected through the opening in the rotor disc so as to form chips.

In prior art wood chippers, it has often been difficult to obtain optimal operation. Problems due to high drawing speed of the wood against the rotor disc have thus arisen, entailing increased fuel consumption and increased wear on rotor and consequent problems with accumulation of material in front of the rotor disc cutters. Furthermore, in large wood cutters where oblique insertion of the wood is performed, there has been a risk of the inclined cutters drawing the wood towards the rotor disc, thereby producing chip pieces with greater length than intended.

### Object of the Invention

It is the purpose of the present invention to provide a system that includes a wood chipper and a method for controlling the feeding of wood into the wood chipper, enabling avoidance of the drawbacks of the prior art wood chippers and to achieve optimal operation by using correct rotational speed for ensuring low fuel consumption and possibility of avoiding unnecessary wear on cutters, retainers, rollers etc, and to establish a better quality of chips as desired by the user.

### Description of the Invention

According to the present invention, this is achieved with a wood chipper of the type mentioned in the introduction, which is peculiar in that it includes a second sensor for monitoring the rotational speed of the draw-in rollers, and a control unit for coordinating the speed of drawing and the rotational speed of the cutters. The method according to the invention is peculiar in that a monitoring of the rotational speed of the draw-in rollers is performed, and that a coordination of the drawing speed and the rotational speed of the cutters is performed.

The new system is distinguished in that not only a monitoring of the rotational speed of the rotor is performed. There is also provided a monitoring of the rotational speed/number of revolutions of the draw-in rollers. The drawing speed is important to coordinate in relation to the rotational speed of the cutters, and the coordination of the rotational speed of the cutters and the drawing speed by controlling the number of revolutions of the draw-in rollers enables avoiding too high feeding speed, thereby avoiding increased fuel consumption as it is avoided that wood is pressing on the rotor disc, increasing the fuel consumption. In this way, wear is also avoided on the rotor, and at the same time accumulation of material in front of the cutters will be avoided, as the wood can be advanced with a coordinated drawing speed.

The result achieved by monitoring the rotational speed of the rotor disc and thereby that of the cutters is used for a display for manual regulation of the rotational speed of the drawing rollers, or alternatively, for an automatic regulation of the rotational speed of the drawing rollers by the application of a control unit. The control unit will thus include a connection to a revolution counter detecting the number of revolutions of the draw-in rollers, and a revolution counter detecting the number of revolutions of the rotor. The control unit will furthermore be connected to a regulating device for the draw-in rollers, e.g. for controlling a valve regulating the oil supply if a hydraulic pump is used for driving the draw-in rollers.

In an advantageous embodiment, it is preferred that for monitoring the number of revolutions of the rollers, a Hall sensor is used, and for monitoring the number of revolutions of the rotor, an inductive sensor is used. However, other sensors for detecting number of revolutions and/or rotational speed may be applied.

When operating the wood chipper, the coordination will be adapted so that the wood is cut just when the end of the wood hits the rotor disc.

Alternatively, the speed of the draw-in rollers may be adjusted downwards so that a chip smaller than the chip length which is optimal corresponding to the spacing between the surface of the rotor disc and the edge of the cutters is attained. This may be effected in that the coordination is adapted so that the wood is cut by the cutter or cutters before the end of the wood hits the rotor disc.

The wood chipper includes a control unit provided with algorithms and calculating units that enable using the results from the rotational speed of the cutters for regulation of the rotational speed of the draw-in rollers. The algorithms may be used for showing something on a display provided in the control unit, or alternatively, the algorithms may be used for an automatic regulation of the rotational speed of the draw-in rollers.

It is preferred that the control unit of the wood chipper includes a storage for storing data for operational parameters, as e.g. number of cutters, number of revolutions/rotational speed of cutters and draw-in rollers and various machine types.

On the basis of such a control unit there is possibility that in this control unit used for control, a storing of data for various operational parameters, as e.g. number of cutters, number of revolutions/rotational speed of cutters and draw-in rollers and various machine types, is performed. This storing is effected in the data store of the control unit.

In the display of the wood chipper, one may freely choose among displaying various parameters, e.g. the number of revolutions of the rotor, rotational speed of the draw-in rollers and hour counting functions. It is preferred that a lit-up display is used, so that correct and sure reading is safeguarded.

The control unit may be adapted so that exceeding of a maximum desired speed will cause a showing to appear on the display, e.g. by emitting a flashing signal indicating that a maximum drawing speed has been exceeded. When changing the type of machine where the speed of the rotor disc can be changed, e.g. from 540 to 1000 rpm, it will be advantageous that the control unit has stores for various machine types. Hereby it becomes possible to choose another setup for the machine on the basis of a stored table, so that connected values between operational parameters, as e.g. number of revolutions for cutters and draw-in rollers, are activated.

Moreover, it is preferred that the control unit is adapted so that a manual change of the limit values is possible without changing the pre-stored standard settings. This means that a user may at any time re-read in the initially stored settings from the manufacturer.

In the control unit there is preferably performed detection of the number of hours, and it is preferred that registration of job hours and total hours is performed. The user may thus reset job hours and use this for determining how long time a task takes, and another counter, which is not reset, may be used as counter of total hours, indicating the total running time for the wood chipper.

Usually, the wood chipper will be arranged with draw-in rollers that rotate about axes situated in a plane which is largely in parallel with the plane of the rotor disc. These rollers may be used for drawing in wood perpendicularly to the rotor disc.

Alternatively, the draw-in rollers may be disposed in a plane with an angle in relation to the rotor disc, which is used by oblique insertion of the wood, meaning that the wood is fed inclining relative (not perpendicularly) to the rotor disc. In such a wood chipper with inclined feeding, it will be a particular advantage to use an operational parameter in the form of a stored chip length when coordinating the drawing speed and the rotational speed of the cutters. Hereby is avoided the risk existing with prior art machines, where inclining cutters usually will draw the wood towards the rotor disc and thereby produce longer chip lengths that desired by the user. It is noted that a system according to the present invention may be used in manually fed wood chippers which are used for wood with lesser dimensions, but which also may be used in wood chippers with crane feeding which is applied to large wood trunks.

### Description of the Drawing

The invention will then be explained in more detail with reference to the accompanying drawing, where
- Fig. 1: shows a perspective view of a rotor disc and draw-in rollers for a wood chipper according to the invention;
- Fig. 2: a side view of the elements shown in Fig. 1;
- Fig. 3: a view of the elements shown in Fig. 1, as seen from above; and
- Fig. 4: a schematic view of a control unit and monitoring sensors in a wood chipper.

### Detailed description of the invention

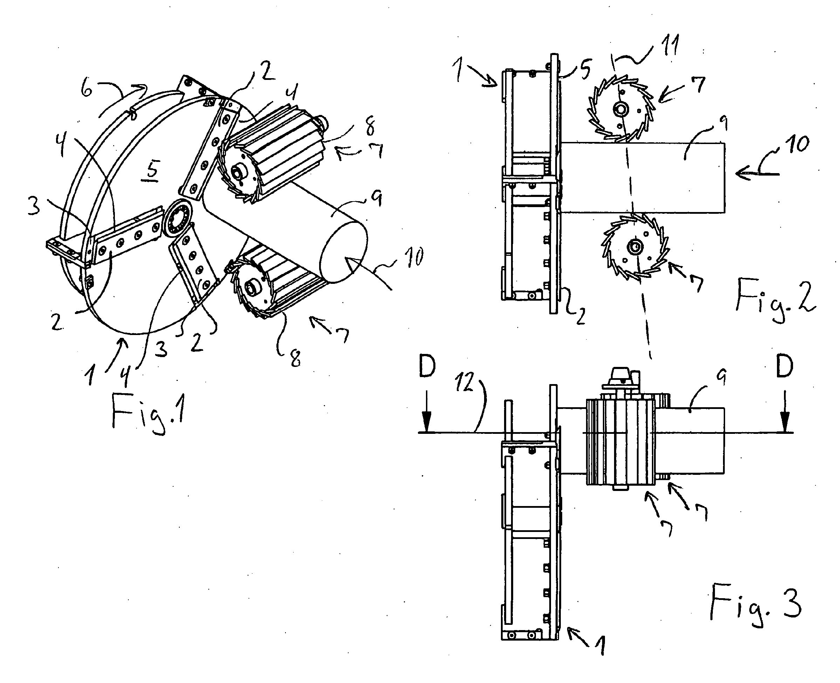

Fig. 1 shows a rotor disc 1 with three cutters 2 mounted largely diagonally. It appears that each of the cutters 2 are mounted opposite an opening 3 with their edges 4 disposed spaced apart from the surface 5 of the rotor disc. The rotor disc is intended to rotate in the direction shown by arrow 6. Moreover, two draw-in rollers 7 appear, provided with lamellae 8 for securing a firm engagement with a piece of wood 9 which is fed against the rotor disc by moving in direction of arrow 10. The wood 9 is inserted with orientation largely perpendicular to the surface 5 of the rotor disc 1.

As it more clearly appears from Fig. 2, the two draw-in rollers 7 are disposed in a plane 11 which is largely parallel with the plane of the rotor disc surface 5. It appears from Fig. 2 compared with Fig. 3, which is at right angle to the view in Fig. 2, that the wood 9 is fed largely perpendicularly to the rotor disc 1 in direction of the indicated axis 12 which is directed perpendicularly to the surface 5 of the rotor disc 1.

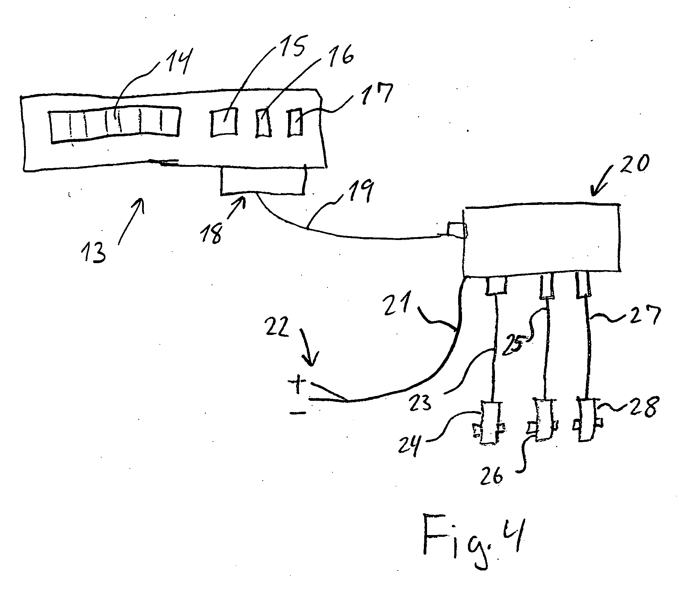

Fig. 4 illustrates a control unit 13 with a display 14. The control unit is arranged with a row of operation pins 15, 16, 17 for use in shifting between different display indications, start-up and changing marked up values, programming of new number values, resetting etc. The control unit 13 furthermore includes an entrance 18 which via a wire 19 is connected to a connection box 20. This enables locating the control unit with the display 14 in a suitable position for the user in that the connection box 20 can be disposed suitably for connecting with monitoring sensor. The connecting box is thus connected with a wire to a power supply 22 which is preferably a 12 V DC source. Moreover, the connecting box is connected with a monitoring sensor 24 via a wire 23 for detecting the rotational speed of the draw-in rollers. The sensor 24 will preferably be a Hall sensor. The connecting box 20 is connected with an outer wire 25 to a sensor 26 for monitoring the number of revolutions of the rotor disc. The sensor 26 will preferably be an inductive sensor. The connecting box 20 is connected with a valve plug 28 via a wire 27 which may be used as regulating valve for a motor (not shown) driving the draw-in rollers.

In the Figures of the drawing, only the most necessary details are shown for explaining the invention. However, there will be further elements in order to make the wood chipper operate. The rotor disc will thus be provided with a shaft connected with a drive unit, which may e.g. be a power take-off shaft on a tractor, or a shaft from an industrial motor, e.g. a diesel powered industrial motor.

Furthermore, a functioning wood chipper will include more mechanical parts in the form of safety brackets, inlet funnels, etc. in order to function.

In the control unit 13 there will moreover be provided data stores which can be of various types which are well-known for data storage, and the control unit may furthermore include a calculating unit.

In the shown embodiment, three cutters are provided; however, it will also be possible to provide a larger as well as a smaller number of cutters on the rotor disc 1.

The invention is not limited to the shown embodiment. Alternatively, the draw-in rollers 7 of the wood chipper may be oblique so that a wooden piece 9 is inserted under an oblique angle in relation to the cutters 2. Also, it is possible that the cutters 2 are not located in a plane parallel with the surface 5 of the rotor disc. Alternatively, the cutters may be provided with an angle of inclination relative to the rotor disc surface 5, such as known in connection with oblique insertion of wood into a wood chipper.

## Claims

1. A wood chipper with draw-in rollers (7) for drawing wood against a rotor disc (1) provided with at least one cutter (2) spaced apart from the rotor disc, and with a first sensor (26) for monitoring the rotational speed of the rotor disc, **characterised in that** it includes a second sensor (24) for monitoring the rotational speed of the draw-in rollers, and a control unit (13) for coordinating the drawing speed and the rotational speed of the cutters.

2. Wood chipper according to claim 1, **characterised in that** the control unit is arranged with algorithms for using the result of the rotational speed of the cutters for manual or automatic regulation of the rotational speed of the draw-in rollers.

3. Wood chipper according to claim 1 or 2, **characterised in that** the control unit includes a display.

4. Wood chipper according to claim 1, 2 or 3, **characterised in that** the control unit includes a store for storing data for operational parameters, as e.g. number of cutters, number of revolutions/rotational speed of cutters and draw-in rollers and various machine types.

5. A method for feeding wood into a wood chipper, where draw-in rollers (7) are used for drawing wood against a rotor disc (1) provided with at least one cutter (2) spaced apart from the rotor disc, and where monitoring of the rotational speed of the rotor disc is performed, **characterised in that** a monitoring of the rotational speed of the draw-in rollers is performed, and that a coordination of the drawing speed and the rotational speed of the cutters is performed.

6. Method according to claim 5, **characterised in that** the result of the rotational speed of the cutters is used for manual or automatic regulation of the rotational speed of the draw-in rollers.

7. Method according to claim 5 or 6, **characterised in that** the coordination is adapted so that the wood is cut just when the end of the wood hits the rotor disc.

8. Method according to claim 5 or 6, **characterised in that** the coordination is adapted so that the wood is cut before the end of the wood hits the rotor disc.

9. Method according to any of claims 5- 8, **characterised in that** the rotational speed of the cutters and the draw-in rollers is shown on a display.

10. Method according to any of claims 5-9, **characterised in that** in a control unit in which controlling is performed, data of operational parameters, as e.g. number of cutters, number of revolutions/rotational speed for cutters and draw-in rollers and various types of machines, are stored.

## Patentansprüche

1. Holzhäcksler mit Einzugrollen (7), um Holz zu einer Rotorscheibe (1) zu ziehen, die mit wenigstens einer Schneideinrichtung (2) versehen ist, die von der Rotorscheibe beabstandet ist, und mit einem ersten Sensor (26), um die Drehzahl der Rotorscheibe zu überwachen, **dadurch gekennzeichnet, dass** ein zweiter Sensor (24) vorhanden ist, um die Drehzahl der Einzugrollen zu überwachen, und eine Steuereinheit (13) vorgesehen ist, um die Ziehgeschwindigkeit und die Drehzahl der Schneideinrichtungen zu koordinieren.

2. Holzhäcksler nach Anspruch 1, **dadurch gekennzeichnet, dass** die Steuereinheit mit Algorithmen versehen ist, um das Resultat der Drehzahl der Schneideinrichtungen für eine manuelle oder automatische Regulierung der Drehzahl der Einzugrollen zu verwenden.

3. Holzhäcksler nach Anspruch 1 oder 2, **dadurch gekennzeichnet, dass** die Steuereinheit eine Anzeige aufweist.

4. Holzhäcksler nach Anspruch 1, 2 oder 3, **dadurch gekennzeichnet, dass** die Steuereinheit einen Speicher aufweist, um Daten für Betriebsparameter wie beispielsweise die Anzahl von Schneideinrichtungen, die Anzahl von Umdrehungen/Drehzahl der Schneideinrichtungen und der Einzugrollen und verschiedene Maschinentypen zu speichern.

5. Verfahren zum Zuführen von Holz zu einem Holzhäcksler, wobei Einzugrollen (7) verwendet werden, um Holz zu einer Rotorscheibe (1) zu ziehen, die mit wenigstens einer Schneideinrichtung (2) versehen ist, die von der Rotorscheibe beabstandet ist, und wobei eine Überwachung der Drehzahl der Rotorscheibe ausgeführt wird, **dadurch gekennzeichnet, dass** eine Überwachung der Drehzahl der Einzugrollen ausgeführt wird und dass eine Koordination der Ziehgeschwindigkeit und der Drehzahl der Schneideinrichtungen ausgeführt wird.

6. Verfahren nach Anspruch 5, **dadurch gekennzeichnet, dass** das Resultat der Drehzahl der Schneideinrichtungen für eine manuelle oder automatische Regulierung der Drehzahl der Einzugrollen verwendet wird.

7. Verfahren nach Anspruch 5 oder 6, **dadurch gekennzeichnet, dass** die Koordination so beschaffen ist, dass das Holz genau dann geschnitten wird, wenn das Ende des Holzes die Rotorscheibe verbirgt.

8. Verfahren nach Anspruch 5 oder 6, **dadurch gekennzeichnet, dass** die Koordination so beschaffen ist, dass das Holz geschnitten wird, bevor das Ende des Holzes die Rotorscheibe verbirgt.

9. Verfahren nach einem der Ansprüche 5-8, **dadurch gekennzeichnet, dass** die Drehzahl der Schneideinrichtungen und der Einzugrollen auf einer Anzeige gezeigt wird.

10. Verfahren nach einem der Ansprüche 5-9, **dadurch gekennzeichnet, dass** in einer Steuereinheit, in der die Steuerung ausgeführt wird, Daten von Betriebsparametern wie beispielsweise die Anzahl der Schneideinrichtungen, die Anzahl der Umdrehungen/Drehzahl der Schneideinrichtungen und der Einzugrollen und verschiedene Maschinentypen gespeichert sind.

## Revendications

1. Hachoir à bois avec rouleaux d'entraînement (7) pour entrainer le bois contre un disque de rotor (1) doté d'au moins un découpeur (2) espacé du disque de rotor, et d'un premier capteur (26) pour contrôler la vitesse de rotation du disque de rotor, **caractérisé en ce qu'**il comprend un second capteur (24) pour contrôler la vitesse de rotation des rouleaux d'entraînement, et une unité de commande (13) pour coordonner la vitesse d'entraînement et la vitesse de rotation des découpeurs.

2. Hachoir à bois selon la revendication 1, **caractérisé en ce que** l'unité de commande est réalisée avec des algorithmes, afin d'utiliser le résultat de la vitesse de rotation des découpeurs pour une régulation manuelle ou automatique de la vitesse de rotation des rouleaux d'entraînement.

3. Hachoir à bois selon la revendication 1 ou 2, **caractérisé en ce que** l'unité de commande comprend un écran.

4. Hachoir à bois selon la revendication 1, 2 ou 3, **caractérisé en ce que** l'unité de commande comprend un magasin pour stocker les données de paramètres opérationnels, comme par exemple le nombre de découpeurs, le nombre de révolutions/la vitesse de rotation des découpeurs et des rouleaux d'entraînement et différents types de machines.

5. Procédé d'alimentation du bois dans un hachoir à bois, où des rouleaux d'entraînement (7) sont utilisés pour entraîner le bois contre un disque de rotor (1), doté d'au moins un découpeur (2) espacé du disque de rotor, et où le contrôle de la vitesse de rotation du disque de rotor est réalisé, **caractérisé en ce qu'**un contrôle de la vitesse de rotation des rouleaux d'entraînement est réalisé, et **en ce qu'**une coordination de la vitesse d'entraînement et de la vitesse de rotation des découpeurs est réalisée.

6. Procédé selon la revendication 5, **caractérisé en ce que** le résultat de la vitesse de rotation des découpeurs est utilisé pour la régulation manuelle ou automatique de la vitesse de rotation des rouleaux d'entraînement.

7. Procédé selon la revendication 5 ou 6, **caractérisé en ce que** la coordination est adaptée pour que le bois soit découpé juste quand l'extrémité du bois frappe le disque de rotor.

8. Procédé selon la revendication 5 ou 6, **caractérisé en ce que** la coordination est adaptée pour que le bois soit découpé avant que l'extrémité du bois ne frappe le disque de rotor.

9. Procédé selon l'une quelconque des revendications 5 à 8, **caractérisé en ce que** la vitesse de rotation des découpeurs et des rouleaux d'entraînement est indiquée sur un écran.

10. Procédé selon l'une quelconque des revendications 5 à 9, **caractérisé en ce que**, dans une unité de commande dans laquelle un contrôle est réalisé, les données de paramètres opérationnels, comme par exemple le nombre de découpeurs, le nombre de révolutions/la vitesse de rotation des découpeurs et les rouleaux d'entraînement et différents types de machines, sont stockées.
